# FASCICULE DE BREVET EUROPEEN

(11) **EP 2 671 766 B1**
(45) Date de publication et mention de la délivrance du brevet: **16.01.2019**
(21) Numéro de dépôt: 13182890.7
(22) Date de dépôt: 15.07.2009
(51) Int. Cl.: B60S 1/38, B60S 1/40, B60S 1/52

(54) **Connecteur hydraulique notamment pour système d'essuie-glace de véhicule automobile**
Hydraulischer Steckverbinder, insbesondere für Scheibenwischsystem eines Kraftfahrzeugs
Hydraulic connector, in particular for a windscreen-wiper system of a motor vehicle

(30) Priorité: 15.07.2008 FR 0804033
(43) Date de publication de la demande: 11.12.2013
(62) Demande divisionnaire de: 09797430.7
(73) Titulaire: Valeo Systèmes d'Essuyage, 78322 Le Mesnil Saint Denis (FR)
(72) Inventeur: Jarasson, Jean-Michel, 78321 LE MESNIL SAINT DENIS (FR); Caillot, Gérald, 78720 CERNAY LA VILLE (FR); Izabel, Vincent, 91380 CHILLY MAZARIN (FR)
(74) Mandataire: Callu-Danseux, Violaine

(56) Documents cités:
- WO-A1-2009/033885
- DE-A1-102004 056 835
- US-A- 4 060 872
- US-A- 4 339 839

## Description

La présente invention a pour objet un balai d'essuyage pourvu d'un connecteur hydraulique utilisé notamment dans un système d'essuie glace par exemple sur un véhicule automobile.

Les systèmes d'essuie-glace, tels que ceux utilisés pour le nettoyage ou le dégivrage du pare-brise d'un véhicule automobile, comprennent généralement un bras d'actionnement relié à une source en fluide ou liquide de nettoyage et/ou de dégivrage et à un moteur, ainsi qu'un balai d'essuyage connecté au bras d'actionnement.

Au cours de l'essuyage, un mouvement relatif existe entre le bras et le balai, de sorte que la connexion entre le bras et le balai doit permettre la rotation de ce balai par rapport à ce bras.

En outre, le balai doit pouvoir être facilement connecté et déconnecté du bras, pour permettre son remplacement ou entretien.

On prévoit donc généralement un adaptateur entre le bras et le balai, pour assurer cette connexion, et les mouvements relatifs précités entre le bras et le balai.

Dans le cas où l'éjection du fluide se fait à partir de buses disposées par exemple sur le capot du véhicule, la connexion entre le bras et le balai n'a pas d'autres fonctions que celles mentionnées ci-dessus.

Par contre, on peut prévoir que le fluide soit éjecté directement du balai d'essuyage pour arroser le pare-brise, dans le but d'augmenter la précision et l'efficacité du lavage ou du dégivrage.

Dans ce cas, il est nécessaire d'amener le fluide jusqu'au balai. Généralement, le balai comprend une ou deux rampes d'acheminement du fluide. On peut prévoir de connecter directement le ou les tuyaux d'arrivée en fluide sur ces rampes. Mais la connexion hydraulique est alors peu fiable en raison du mouvement relatif entre le bras et le balai. De plus, il est difficile dans ce cas de cacher et de protéger les tuyaux d'arrivée. Enfin, la connexion et la déconnexion ne sont pas des opérations simples pour l'utilisateur qui veut changer un balai usé.

On prévoit que l'adaptateur de connexion entre le bras et le balai serve également à la connexion hydraulique, tel que décrit par exemple dans le document WO 2006/056406, afin de résoudre les problèmes mentionnés ci-dessus.

Dans ce document, l'élément de connexion se décompose en un adaptateur 15 pourvu d'un trou traversant 19 pour l'assemblage en rotation avec le bras, et un répartiteur de fluide de nettoyage 27 qui vient s'assembler dans l'adaptateur 15.

Le répartiteur 27 est pourvu de deux raccords de sortie 21 en chacune de ses extrémités, destinés à être raccordés à une rampe du balai, et d'un raccord d'entrée 22 perpendiculaire débouchant directement dans le cylindre central de répartition, destiné à être raccordé au tuyau d'arrivée de fluide.

Dans le cas d'un balai à deux rampes, on prévoit deux éléments de connexion symétriques, assemblés par coopération d'un ensemble bouchon 17 du premier élément de connexion plus trou 18 du deuxième élément de connexion.

Le problème posé par cet élément de connexion est qu'il est complexe et coûteux à fabriquer et à assembler.

Par ailleurs, la connexion/déconnexion du balai n'est pas simple.

Egalement, le risque existe que le répartiteur se désassemble de l'adaptateur en raison des mouvements relatifs entre le bras et le balai.

En outre, le raccord d'arrivée débouche directement dans le répartiteur, sur le côté, ce qui rend difficile la protection du tuyau d'arrivée de fluide ainsi que sa dissimulation pour des raisons esthétiques.

Un autre problème est celui de l'effort de surpression engendré généralement parallèlement au balai, donc au répartiteur, dans la mesure où le tuyau d'arrivée en fluide est généralement dissimulé et guidé le long du bras, et donc arrive au niveau de la connexion orienté parallèlement à ce balai. Cet effort de surpression risque alors de déconnecter le tuyau d'arrivée du raccord d'entrée dans le répartiteur qui se trouve orienté perpendiculairement à cet effort de surpression.

L'objet de l'invention est donc d'apporter une solution aux problèmes précités parmi d'autres problèmes.

L'invention se rapporte donc, selon un premier aspect, à un balai d'essuyage pourvu d'au moins une rampe d'acheminement de fluide notamment de nettoyage et/ou de dégivrage et d'un connecteur hydraulique.

Le connecteur comprend au moins un raccord d'entrée apte à être connecté à une arrivée du fluide, et au moins un répartiteur pourvu d'au moins un raccord de sortie destiné à être connecté à la rampe.

Le connecteur comprend en outre au moins un chemin interne pour le cheminement du fluide depuis le raccord d'entrée jusqu'au répartiteur.

Ainsi, grâce à la présence du chemin interne dans le connecteur, le raccord d'entrée peut être placé à divers endroits du connecteur, sans déboucher directement dans le répartiteur.

En particulier, il peut être placé en sorte de réduire les effets de l'effort de surpression, de permettre la dissimulation et la protection de la connexion, et de faciliter la connexion/déconnexion.

Selon l'invention, le raccord d'entrée est orienté parallèlement au répartiteur.

L' arrivée en fluide étant orientée parallèlement au balai, par le dessus, la connexion/déconnexion est facilitée.

Le connecteur peut, dans un exemple non revendiqué, se décomposer en deux parties monoblocs. Une première de ses deux parties monoblocs, de préférence obtenue par moulage d'un matériau plastique, comprenant le raccord d'entrée et une première portion du chemin interne. La deuxième de ces deux parties monoblocs, également de préférence obtenue par moulage d'un matériau plastique, comprenant le reste du chemin interne et tout ou partie du répartiteur.

Le connecteur ainsi formé peut donc être fabriqué simplement, par exemple par moulage des deux pièces monoblocs mentionnées, malgré la présence d'un chemin interne qui peut être complexe.

Ces deux parties monoblocs sont de préférences assemblées hermétiquement, par exemple par soudage par ultrasons ou par surmoulage d'un joint. Ce joint peut être constitué du même matériau que celui de la première et/ou de la deuxième partie monobloc.

Selon l'invention, le connecteur est constitué d'un corps monobloc de préférence obtenu par moulage d'un matériau plastique.

Il est alors nécessaire de prévoir un ou plusieurs orifices pour le démoulage qui doivent être rebouchés après le démoulage, en fonction de la complexité du chemin interne.

Dans les deux cas, la fabrication du connecteur est simplifiée, et sa connexion/déconnexion également, dans la mesure où il forme un ensemble monobloc, éventuellement après assemblage des deux parties mentionnées ci-dessus.

Eventuellement, le connecteur peut comprendre deux raccords d'entrée aptes à être connecté à une arrivée du fluide.

Eventuellement également, notamment lorsque le connecteur est destiné à être utilisé avec un balai d'essuyage pourvu de deux rampes d'acheminement de fluide, le connecteur peut comprendre deux répartiteurs.

Chacun de ces répartiteurs est alors pourvu d'au moins un raccord de sortie destiné à être connecté à l'une ou l'autre des deux rampes.

Un ou plusieurs des répartiteurs peut être pourvu de deux raccords de sortie opposés destinés à être connectés à la rampe.

Il est également possible de prévoir qu'un ou plusieurs des répartiteurs soit pourvu d'un orifice, de préférence en son milieu, ce qui permet d'arroser la vitre également au milieu du balai, là ou se situe le connecteur et ou la rampe est interrompue par ce connecteur.

Un ou plusieurs des raccords d'entrée, peut être un raccord mâle, par exemple de type canule, destiné alors à être connecté à une arrivée du fluide femelle.

Alternativement, un ou plusieurs des raccords d'entrée peut être un raccord femelle, par exemple de type orifice à la surface du connecteur, destiné alors à être connecté à une arrivée du fluide mâle, par exemple de type canule.

Le système comprend un balai d'essuyage, pourvu d'au moins une rampe d'acheminement de fluide notamment de nettoyage et/ou de dégivrage.

Le balai est connecté à un bras d'actionnement par l'intermédiaire d'un adaptateur.

L'adaptateur est relié en rotation à un connecteur tel que présenté ci-dessus.

Ce connecteur et connecté d'une part par son ou ses dits raccords de sortie à la ou aux rampes, et d'autre part par son ou ses raccords d'entrée à une ou deux arrivées de fluide.

L'invention se rapporte à un balai d'essuyage, notamment pour un système d'essuie-glace pour un véhicule automobile, pourvu d'au moins une rampe d'acheminement de fluide notamment de nettoyage et/ou de dégivrage.

Le balai comprend un connecteur tel que présenté ci-dessus, connecté par son ou ses raccords de sortie à la ou aux rampes.

Le bras comprend un adaptateur relié en rotation à un connecteur tel que présenté ci-dessus.

Le connecteur est apte à être connecté par son ou ses raccords d'entrée à une ou deux arrivées de fluide.

D'autres caractéristiques et avantages de l'invention apparaîtront plus clairement et de manière complète à la lecture de la description ci-après des variantes préférées de réalisation, lesquelles sont données à titre d'exemples non limitatifs et en référence aux dessins annexés suivants.
- figures 1a et 1b : représentent schématiquement un exemple non revendiqué de balai d'essuyage, respectivement vu en perspective éclatée et en coupe transversale,
- figures 2a et 2b : représentent schématiquement un premier exemple de connecteur hydraulique, respectivement en perspective pleine et coupée,
- figures 3a et 3b : représentent schématiquement un deuxième exemple non revendiqué de connecteur hydraulique, respectivement en perspective pleine et coupée,
- figures 4a et 4b : représentent schématiquement un troisième exemple non revendiqué de connecteur hydraulique, respectivement en perspective pleine et coupée,
- figures 5a et 5b : représentent schématiquement un quatrième exemple non revendiqué de connecteur hydraulique, respectivement en perspective pleine et coupée,
- figure 6 : représente schématiquement un cinquième exemple non revendiqué de connecteur hydraulique, en perspective pleine,
- figures 7a et 7b : représentent schématiquement un sixième exemple non revendiqué de connecteur hydraulique, respectivement en perspective pleine et coupée,
- figures 8a à 8d : représentent schématiquement un septième exemple tel que revendiqué de connecteur hydraulique, dans différents modes de représentation en perspective pleine ou coupée.

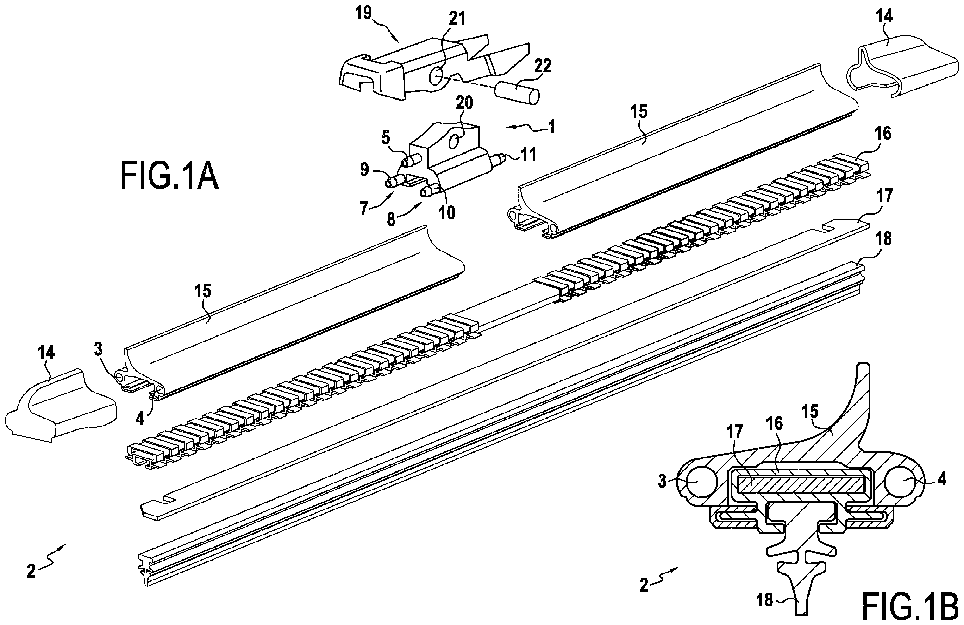

Tel que représenté aux figures 1a et 1b, le balai d'essuyage 2 est relié à, ou destiné à être relié à, un bras d'actionnement (non représenté) par l'intermédiaire d'un adaptateur 19, pour former alors un système d'essuie-glace.

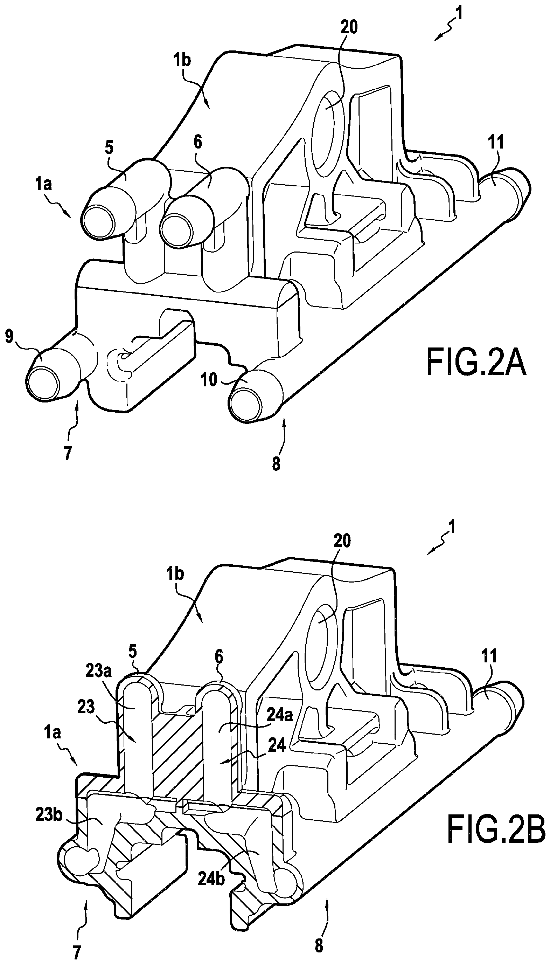

L'adaptateur 19 est relié en rotation à un connecteur hydraulique 1, qui est décrit plus loin selon différents exemples de réalisation en références aux figures 2 à 8, par un axe d'articulation 22 et les orifices d'assemblage 20 et 21 respectivement dans le connecteur 1 et l'adaptateur 19.

Ce connecteur hydraulique 1, dans cette variante de réalisation, comprend un raccord 5 d'entrée, destiné à être connecté à une arrivée en fluide de nettoyage et/ou de dégivrage.

Le connecteur 1 comprend par ailleurs plusieurs raccords de sortie 9, 10, 11, destinés à se connecter aux rampes d'acheminement 3, 4 du balai 2.

Précisément, le connecteur 1 comprend deux répartiteurs 7 et 8 qui se terminent chacun par deux raccords de sortie en leurs extrémités opposées respectives.

Ainsi, le répartiteur 7 comprend un premier raccord de sortie 9 et un deuxième en son extrémité opposé, non visible sur la représentation en perspective de la figure la. Par ailleurs, le répartiteur 8, comprend un premier raccord de sortie 10 et un deuxième 11 en son extrémité opposée.

Comme indiqué ci-dessus, les raccords de sortie 9, 10, 11 du connecteur 1 sont destinés à se connecter aux rampes d'acheminement 3, 4 du balai 2, qui sont, dans cet exemple, formées dans la partie supérieure de ce balai 2 qui joue le rôle de déflecteur 15, formée en deux parties 15 connectées de chaque côté du connecteur 1. Ces rampes d'acheminement 3, 4 sont percées d'orifices permettant de projeter le fluide de nettoyage et/ou de dégivrage sur la vitre.

Comme on peut le voir plus précisément sur la vue en coupe transversale de la figure 1b, le déflecteur 15 présente un profil tel qu'il reçoit une monture 16. Cette monture 16, selon son profil spécifique, reçoit à sont tour une latte métallique 17, et, en partie inférieure, une lame 18 d'essuyage en caoutchouc ou similaire.

Deux embouts ou caches 14 ferment les extrémités de chaque parties du déflecteur 15, en sorte de fermer les extrémités des rampes d'acheminement 3, 4, d'empêcher la monture 16, la latte 17 et la lame 18 de glisser hors de leurs logements respectifs, ainsi que pour des raisons d'esthétique.

Dans le premier exemple de connecteur hydraulique 1 représenté aux figures 2a et 2b, chacun des répartiteurs 7 et 8 se termine par deux raccords de sortie opposés 9, 10, 11, tel qu'expliqué plus haut.

En outre, le connecteur 1 présente deux raccords d'entrée 5, 6, qui seront chacun connecté à une arrivée de fluide (la même, ou deux distinctes). Ces raccords d'entrée 5 et 6 sont orientés parallèlement aux répartiteurs 7 et 8, qui sont eux même destinés à être orientés dans le prolongement, donc parallèlement aux rampes d'acheminement 3 et 4 du balai 2 de la figure la.

Dans la mesure où le balai 2 est orienté sensiblement parallèlement au bras d'actionnement, au moins en position de repos, et où l'arrivée en fluide qui vient se connecter aux raccords d'entrée 5 et 6 suit le bras d'actionnement, ces raccords d'entrée 5 et 6 se trouvent donc orientés sensiblement parallèlement à l'orientation de l'arrivée en fluide.

Dans cet exemple, le connecteur 1 se décompose en une première partie la monobloc, moulée en matière plastique, et une deuxième partie 1b monobloc, également moulée en matière plastique.

Ces deux parties monoblocs 1a et 1b sont assemblées l'une avec l'autre de façon à former un connecteur 1 monobloc.

L'assemblage doit être hermétique, et peut se faire par exemple par soudure à ultrasons, ou encore par surmoulage d'un joint de préférence dans la même matière plastique que la matière utilisée pour l'une ou l'autre des deux parties la, 1b, ou pour les deux.

Comme on peut le voir plus précisément sur la vue en coupe de la figure 2b, un chemin interne 23 relie le raccord d'entrée 5 au répartiteur 7, et un autre chemin interne 24 relie le raccord d'entrée 6 au répartiteur 8.

Chacun des deux chemins internes 23 et 24 comprend une première portion 23a, 24a partant du raccord d'entrée 5 ou 6, et appartenant à la première partie monobloc la.

Le reste du chemin interne 23, référencé 23b, part de la portion 23a pour rejoindre le répartiteur 7, et appartient à la deuxième partie monobloc 1b.

De même, le reste du chemin interne 24, référencé 24b, part de la portion 24a pour rejoindre le répartiteur 8, et appartient à la deuxième partie monobloc 1b.

Ainsi, la première partie monobloc la comprend les deux raccords d'entrée 5 et 6, et les deux premières portions 23a et 23b respectivement des deux chemins internes 23 et 24.

Par ailleurs, la deuxième partie monobloc 1b comprend le reste 23b du chemin interne 23, et le reste 24b du chemin interne 24, ainsi que les deux répartiteurs 7 et 8.

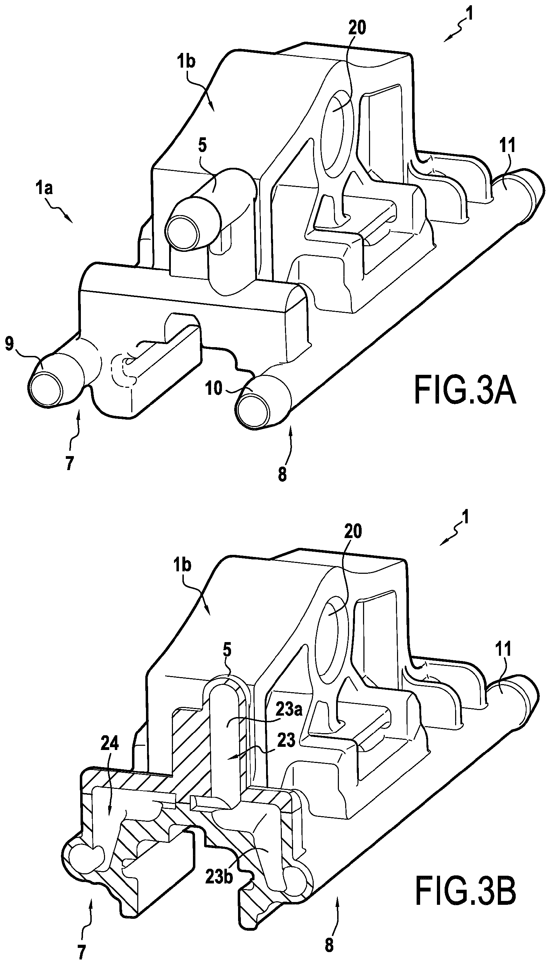

Dans le deuxième exemple de connecteur 1, tel que représenté aux figures 3a et 3b, un seul raccord d'entrée 5, sur la première partie monobloc la du connecteur 1, permet d'alimenter le répartiteur 8 sur la deuxième partie monobloc 1b du connecteur 1, par l'intermédiaire du chemin interne 23 subdivisé en une première portion 23 a dans la première partie monobloc la et le reste 23b dans la deuxième partie monobloc 1b.

Le chemin interne 24, qui déboucle dans le répartiteur 7, n'est relié à aucun raccord d'entrée.

Il est ainsi possible de fabriquer indépendamment les premières parties monoblocs la, avec un seul 5 ou deux 5 et 6 raccords d'entrée, et les deuxièmes parties monoblocs avec un seul ou deux répartiteurs 7 et 8, et de les assembler pour former un connecteur 1 adapté à un type de balai 2 ou un autre (bi-rampes, mono-rampe...).

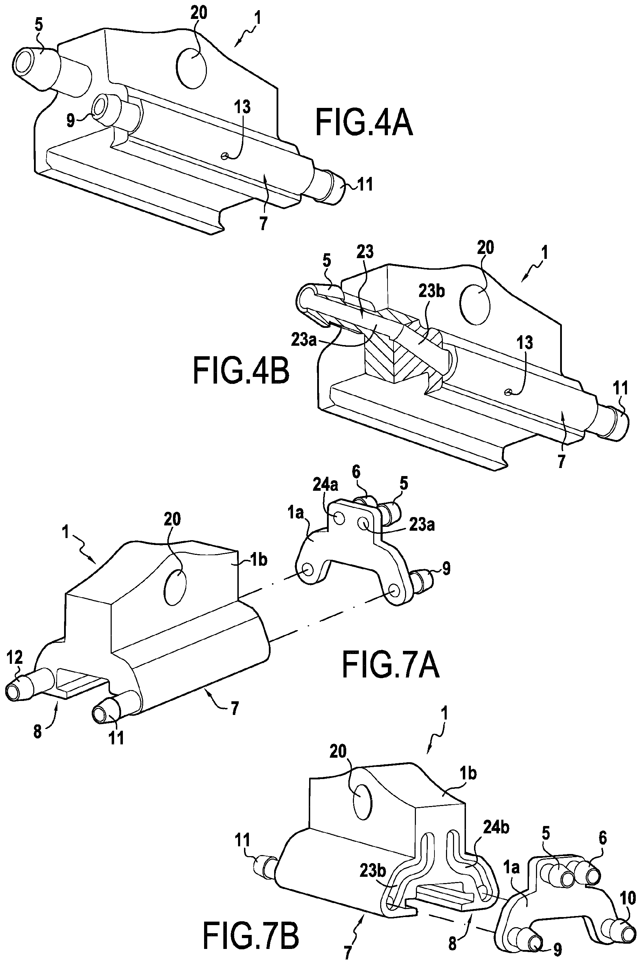

Dans le troisième exemple de connecteur 1, tel que représenté aux figures 4a et 4b, un seul raccord d'entrée 5, en position centrale, est relié à un seul répartiteur 7 par l'intermédiaire d'un chemin interne 23.

Ce répartiteur 7 peut comprendre un orifice 13, de préférence en son milieu, permettant la projection du fluide circulant dans le conduit du répartiteur 7 sur la vitre à nettoyer ou dégivrer, à un niveau du balai où la rampe d'acheminement 3 ou 4 (voir figure la) est interrompue.

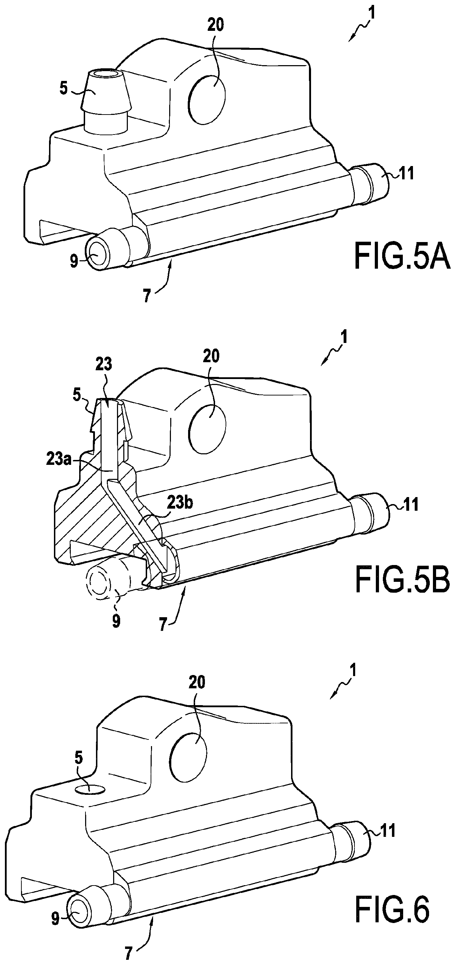

Les figures 5a et 5b montrent un quatrième exemple de connecteur 1, présentant un unique raccord d'entrée 5 connecté à un unique répartiteur 7.

Dans cet exemple, la seule différence avec le connecteur des figures 4a et 4b est que le raccord d'entrée est orienté perpendiculairement au répartiteur 7, par le dessus du connecteur 1.

L'arrivée en fluide, généralement orientée sensiblement parallèlement au répartiteur (voir explications ci-dessus en références aux figures la, 2a et 2b), est alors raccordée à ce raccord d'entrée 5 par un élément de jonction en « L », dissimulé et bloqué par l'adaptateur 19 (voir figure 1).

Dans cet exemple comme dans les précédents, le ou les raccords d'entrée 5, 6 sont des raccords mâle, de type canule pénétrant dans l'arrivée en fluide femelle.

A l'inverse, dans le cinquième exemple de connecteur 1, représenté à la figure 6, le raccord d'entrée 5 est un raccord femelle ou orifice 5 dans laquelle l'arrivée en fluide mâle, par exemple de type canule, est susceptible de pénétrer.

A l'exception de cette différence, ce cinquième exemple de connecteur 1 est en tout point identique au quatrième exemple de connecteur 1 tel qu représenté aux figures 5a et 5b.

Le sixième exemple de connecteur 1, tel que représenté aux figures 7a et 7b, présente deux raccords d'entrée 5, 6 chacun relié à un répartiteur 7, 8 par l'intermédiaire d'un chemin interne 23, 24.

Ce connecteur 1 est également constitué de deux parties monoblocs 1a et 1b assemblées hermétiquement comme expliqué plus haut.

Dans cet exemple, la première partie monobloc la comprend les deux raccords d'entrée 5 et 6, et les toutes premières portions respectives 23a et 24a des chemins internes 23 et 24, correspondant aux parties horizontales respectives de ces chemins internes 23 et 24, dans le prolongement des raccords 5 et 6.

La deuxième partie monobloc 1b comprend les restes respectifs 23b, 24b de chacun des chemins internes 23 et 24 et la plus grande partie de chaque répartiteur 7 et 8 (à l'exception de la courte portion horizontale en prolongement de chaque raccord de sortie 9 et 10).

Cette deuxième partie monobloc 1b comprend donc la plus grande portion de chacun des chemins internes 23 et 24, ainsi que la plus grande partie de chaque répartiteur 7 et 8.

Ces restes 23b et 24b des chemins internes 23 et 24 sont constitués par des canaux ouverts longitudinalement, qui se retrouvent fermés hermétiquement une fois les deux parties monoblocs 1a et 1b assemblées hermétiquement tel qu'expliqué plus haut.

On peut remarquer que, dans ce sixième exemple, les raccords de sortie 9 et 10 font partie de la première partie monobloc la, alors que dans le premier exemple (figures 2a et 2b) ces raccords de sortie 9 et 10 font partie de la deuxième partie monobloc 1b.

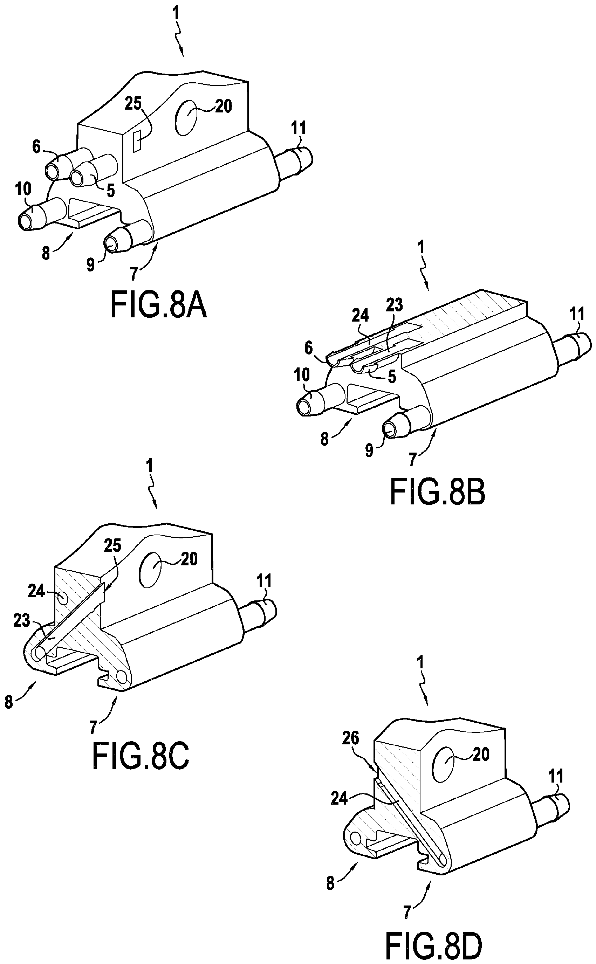

Dans le septième exemple et selon l'invention, tel que représenté aux figures 8a à 8d, le connecteur 1 n'est pas constitué de deux parties monoblocs assemblées hermétiquement, comme dans les précédents exemples, mais d'un seul bloc.

On retrouve deux raccords d'entrée 5 et 6 reliés respectivement à deux répartiteurs 8 et 7 par l'intermédiaire de deux chemins internes 23 et 24.

Compte tenu de la complexité des chemins internes 23 et 24 qui ne sont pas en ligne droite, puisque les raccords d'entrée 5 et 6 ne peuvent pas être alignés avec les répartiteurs 7 et 8, il est nécessaire de prévoir des orifices de démoulage 25 et 26 pour chacun de ces chemins internes 23 et 24.

Ainsi, comme on peut le voir à la figure 8b, chacun des chemins internes 23 et 24 présente une première partie horizontale partant respectivement des raccords d'entrée 5 et 6.

L'une de ces premières parties horizontales, par exemple celle correspondant au chemin interne 24, dépasse légèrement l'autre.

Le démoulage, en ce qui concerne ces deux premières parties horizontales, ne pose pas de problème puisque l'évacuation de la matière peut se faire par l'intermédiaire des raccords d'entrée 5 et 6.

Chacune des premières parties horizontales des chemins internes 23 et 24 se prolonge ensuite en une partie oblique qui rejoint le répartiteur 7 ou 8, tel qu'on peut le voir sur les coupes des figures 8c et 8d.

Ainsi, le chemin interne 23 relie le raccord d'entrée 5 au répartiteur 8 transversalement opposé, et le chemin interne 24 relie le raccord d'entrée 6 au répartiteur 7 transversalement opposé.

Pour chacune des parties obliques des chemins internes 23 et 24, il est donc nécessaire de prévoir un orifice de démoulage 25, 26 pour permettre l'évacuation de la matière lors du démoulage.

L'ensemble de la description ci-dessus est donné à titre d'exemple, et n'est donc pas limitatif de l'invention.

En particulier, le nombre exact de raccord d'entrée 5, 6, de répartiteurs 7, 8, de raccords de sortie 9, 10, 11, 12, et de chemins internes 23, 24, n'est pas limitatif de l'invention.

### Liste des références numériques

1 - Connecteur hydraulique
1a, 1b - parties monoblocs du connecteur hydraulique
2 - balai d'essuyage
3, 4 - rampes d'acheminement du fluide de nettoyage et/ou dégrivrage
5, 6 - raccords d'entrée
7, 8, - répartiteurs
9, 10, 11, 12 - raccords de sortie
13 - orifice d'arrosage
14 - embouts
15 - déflecteur
16 - monture
17 - latte
18 - lame d'essuyage
19 - adaptateur
20 - orifice d'assemblage dans le connecteur hydraulique
21 - orifice d'assemblage dans l'adaptateur
22 - axe d'articulation
23, 24 - chemins internes
23a, 23b, 24a, 24b - portions des chemins internes
25, 26 - orifices de démoulage

## Revendications

1. Balai d'essuyage (2), notamment pour un système d'essuie-glace pour un véhicule automobile, pourvu d'au moins une rampe (3, 4) d'acheminement de fluide notamment de nettoyage et/ou de dégivrage, le balai d'essuyage comprend un connecteur hydraulique (1) et est destiné à être relié à un bras d'actionnement par l'intermédiaire d'un adaptateur (19) relié en rotation au connecteur hydraulique (1) par un axe d'articulation (22), ledit connecteur hydraulique (1) comprenant au moins un raccord d'entrée (5, 6) apte à être connecté à une arrivée dudit fluide, et au moins un répartiteur (7, 8) pourvu d'au moins un raccord de sortie (9, 10, 11) connecté à ladite rampe (3, 4), le connecteur hydraulique (1) est constitué d'un corps monobloc, de préférence obtenu par moulage d'un matériau plastique, et comprend en outre au moins un chemin interne (23, 24) pour le cheminement dudit fluide depuis ledit raccord d'entrée (5, 6) jusqu'audit répartiteur (7, 8), le connecteur hydraulique (1) est connecté par son ou ses dits raccords de sortie (9, 10, 11) à ladite ou auxdites rampes (3, 4) **caractérisé en ce que** le raccord d'entrée (5, 6) est orienté parallèlement au répartiteur (7, 8).

2. Balai d'essuyage (2) selon la revendication 1, **caractérisé en ce que** le connecteur hydraulique (1) comprend deux raccords d'entrée (5, 6) aptes à être connecté à une arrivée du fluide.

3. Balai d'essuyage (2) selon l'une des revendications précédentes, **caractérisé en ce que** balai d'essuyage (2) est pourvu de deux rampes (3, 4) d'acheminement de fluide notamment de nettoyage et/ou de dégivrage, et **en ce que** le connecteur hydraulique (1) comprend deux répartiteurs (7, 8) chacun pourvu d'au moins un raccord de sortie (9, 10, 11) destiné à être connecté à l'une ou l'autre desdites deux rampes (3, 4).

4. Balai d'essuyage (2) selon l'une des revendications précédentes, **caractérisé en ce que** le répartiteur (7, 8), ou un des deux répartiteurs (7, 8), ou les deux (7, 8), est ou sont pourvu(s) de deux raccords de sortie opposés (9, 10, 11) destinés à être connecté à la rampe (3, 4) ou l'une des rampes (3, 4).

5. Balai d'essuyage (2) selon l'une des revendications précédentes, **caractérisé en ce que** le répartiteur (7, 8), ou un des deux répartiteurs (7, 8), ou les deux (7, 8), est ou sont pourvu(s) d'un orifice (13) de préférence en son ou leur milieu.

6. Balai d'essuyage (2) selon l'une des revendications précédentes, **caractérisé en ce que** le raccord d'entrée (5, 6), ou un des deux raccords d'entrée (5, 6), ou les deux (5, 6), est un ou sont des raccord(s) mâle(s), par exemple de type canule (5, 6), destiné(s) à être connecté(s) à une arrivée du fluide femelle.

7. Balai d'essuyage (2) selon l'une des revendications précédentes, **caractérisé en ce que** le raccord d'entrée (5, 6), ou un des deux raccords d'entrée (5, 6), ou les deux (5, 6), est un ou sont des raccord(s) femelle(s), par exemple de type orifice (5) à la surface dudit connecteur (1), destiné(s) à être connecté(s) à une arrivée du fluide mâle, par exemple de type canule.

## Patentansprüche

1. Wischerblatt (2), insbesondere für eine Scheibenwischsystem eines Kraftfahrzeugs, welches mit mindestens einer Rampe (3, 4) zur Leitung von Fluid, insbesondere zur Reinigung und/oder zur Enteisung, versehen ist, wobei das Wischerblatt einen hydraulischen Steckverbinder (1) umfasst und dazu bestimmt ist, mit einem Betätigungsarm mit Hilfe eines Adapters (19) verbunden zu werden, der in Drehung mit dem hydraulischen Steckverbinder (1) durch eine Gelenksachse (22) verbunden ist, wobei der hydraulische Steckverbinder (1) mindestens eine Eingangsverbindung (5, 6), die geeignet ist, mit einer Zufuhr des Fluids verbunden zu werden, und mindestens einen Verteiler (7, 8), der mit mindestens einer Ausgangsverbindung (9, 10, 11) versehen ist, die mit der Rampe (3, 4) verbunden ist, umfasst, wobei der hydraulische Steckverbinder (1) aus einem Monoblockörper besteht, der vorzugsweise durch Formen eines Kunststoffmaterials erhalten wird, und außerdem mindestens einen inneren Weg (23, 24) zur Leitung des Fluids von der Eingangsverbindung (5, 6) bis zum Verteiler (7, 8) umfasst, wobei der hydraulische Steckerverbinder (1) durch seine Ausgangsverbindung oder Ausgangsverbindungen (9, 10, 11) mit der oder den Rampen (3, 4) verbunden ist,
**dadurch gekennzeichnet, dass** die Eingangsverbindung (5, 6) parallel zum Verteiler (7, 8) ausgerichtet ist.

2. Wischerblatt (2) nach Anspruch 1,
**dadurch gekennzeichnet, dass** der hydraulische Steckverbinder (1) zwei Eingangsverbindungen (5, 6) umfasst, die geeignet sind, mit einer Zufuhr des Fluids verbunden zu werden.

3. Wischerblatt (2) nach einem der vorhergehenden Ansprüche,
**dadurch gekennzeichnet, dass** das Wischerblatt (2) mit zwei Rampen (3, 4) zur Leitung von Fluid, insbesondere zur Reinigung und/oder Enteisung, versehen ist, und dadurch, dass der hydraulische Steckverbinder (1) zwei Verteiler (7, 8) umfasst, welche jeweils mit mindestens einer Ausgangsverbindung (9, 10, 11) versehen sind, die dazu bestimmt ist, mit der einen oder der anderen der beiden Rampen (3, 4) verbunden zu werden.

4. Wischerblatt (2) nach einem der vorhergehenden Ansprüche,
**dadurch gekennzeichnet, dass** der Verteiler (7, 8) oder einer der beiden Verteiler (7, 8) oder die beiden Verteiler (7, 8) mit zwei gegenüberliegenden Ausgangsverbindungen (9, 10, 11) versehen ist oder sind, die dazu bestimmt sind, mit der Rampe (3, 4) oder einer der Rampen (3, 4) verbunden zu werden.

5. Wischerblatt (2) nach einem der vorhergehenden Ansprüche,
**dadurch gekennzeichnet, dass** der Verteiler (7, 8) oder einer der beiden Verteiler (7, 8) oder die beiden Verteiler (7, 8) mit einer Öffnung (13) in seiner oder ihrer Mitte versehen ist oder sind.

6. Wischerblatt (2) nach einem der vorhergehenden Ansprüche,
**dadurch gekennzeichnet, dass** die Eingangsverbindung (5, 6) oder eine der beiden Eingangsverbindungen (5, 6) oder die beiden Eingangsverbindungen (5, 6) eine männliche Verbindung ist oder männliche Verbindungen sind, beispielsweise vom Kanülentyp (5, 6), die dazu bestimmt ist oder sind, mit einer weiblichen Fluidzufuhr verbunden zu werden.

7. Wischerblatt (2) nach einem der vorhergehenden Ansprüche,
**dadurch gekennzeichnet, dass** die Eingangsverbindung (5, 6) oder eine der beiden Eingangsverbindungen (5, 6) die beiden Eingangsverbindungen (5, 6) eine weibliche Verbindung ist oder weibliche Verbindungen sind, beispielsweise vom Öffnungstyp (5) an der Oberfläche des Steckverbinders (1), die dazu bestimmt ist oder sind, mit einer männlichen Fluidzufuhr, beispielsweise vom Kanülentyp, verbunden zu werden.

## Claims

1. Wiper blade (2), more particularly for a motor vehicle windscreen wiper system, fitted with at least a perforated pipe (3, 4) carrying fluid, more particularly cleaning and/or de-icing fluid, said wiper blade comprises a hydraulic connector (1) and is intended to be connected to a drive arm by an adaptor (19) rotatingly connected to the hydraulic connector (1) by means of a hinge axis (22), said hydraulic connector (1) comprising at least one inlet coupling (5, 6) suitable for connection to a fluid feed, and at least one distributor (7, 8) provided with at least one outlet coupling (9, 10, 11) connected to said perforated pipe (3, 4), the hydraulic connector (1) is made in one piece , preferably obtained by moulding a plastic material, and comprises in addition at least one internal path (23, 24) for carrying said fluid from said inlet coupling (5, 6) to said distributor (7, 8), the hydraulic connector (1) is connected by its said outlet coupling or its said outlet couplings (9, 10, 11) to said perforated pipe or said perforated pipes (3, 4), **characterized in that** the inlet coupling (5, 6) is oriented parallel to the distributor (7, 8).

2. Wiper blade (2) according to claim 1, **characterised in that** the hydraulic connector (1) comprises two inlet couplings (5, 6) suitable for connection to a fluid feed.

3. Wiper blade (2) according to any one of the preceding claims, **characterised in that** the wiper blade (2) is equipped with two perforated pipes (3, 4) carrying fluid, more particularly cleaning and/or de-icing fluid, and **in that** the hydraulic connector (1) comprises two distributors (7, 8), each one being provided with at least one outlet coupling (9, 10, 11) intended to be connected to either one of said two perforated pipes (3, 4).

4. Wiper blade (2) according to any one of the preceding claims, **characterised in that** the distributor (7, 8), or one of the two distributors (7, 8), or both distributors (7, 8) is/are provided with two opposite outlet couplings (9, 10, 11) intended to be connected to the perforated pipe (3, 4) or one of the perforated pipes (3, 4).

5. Wiper blade (2) according to any one of the preceding claims, **characterised in that** the distributor (7, 8) or one of the two distributors (7, 8), or both distributors (7, 8) is/are provided with an orifice (13) preferably in its or their centre.

6. Wiper blade (2) according to any one of the preceding claims, **characterised in that** the inlet coupling (5, 6), or one of the two inlet couplings (5, 6), or both inlet couplings (5, 6) is/are (a) male coupling (s), for example of the canula type (5, 6), intended to be connected to a female fluid feed.

7. Wiper blade (2) according to any one of the preceding claims, **characterised in that** the inlet coupling (5, 6), or one of the two inlet couplings (5, 6), or both inlet couplings (5, 6) is/are (a) female coupling(s), for example of the orifice type (5) at the surface of said connector (1), intended to be connected to a male fluid feed, for example of the canula type.
